**Europäisches Patentamt**

**European Patent Office**

**Office européen des brevets**

(19)

(11) Veröffentlichungsnummer : **0 127 741 B2**

(12) # NEUE EUROPÄISCHE PATENTSCHRIFT

(45) Veröffentlichungstag der neuen Patentschrift :
**29.04.92 Patentblatt 92/18**

(51) Int. Cl.$^5$ : **B60G 11/32,** B60G 17/00,
F16F 3/00, F16F 6/00

(21) Anmeldenummer : **84103268.3**

(22) Anmeldetag : **22.03.84**

(54) **Federungssystem für ein Kraftfahrzeug.**

(30) Priorität : **11.04.83 DE 3312895**

(43) Veröffentlichungstag der Anmeldung :
**12.12.84 Patentblatt 84/50**

(45) Bekanntmachung des Hinweises auf die
Patenterteilung :
**05.11.86 Patentblatt 86/45**

(45) Bekanntmachung des Hinweises auf die
Entscheidung über den Einspruch :
**29.04.92 Patentblatt 92/18**

(84) Benannte Vertragsstaaten :
**AT BE CH DE FR GB IT LI NL SE**

(56) Entgegenhaltungen :
**DD-A- 28 186
DE-A- 1 755 496
DE-A- 1 926 646
DE-A- 2 024 746
DE-A- 2 442 118
DE-A- 2 457 772
DE-A- 2 554 686
DE-A- 2 643 512
DE-A- 3 024 921
DE-A- 3 126 470
DE-B- 1 805 789
DE-C- 762 066**

(56) Entgegenhaltungen :
**DE-C- 840 354
DE-C- 3 410 473
DE-U- 1 812 909
DE-U- 8 222 808
FR-A- 1 000 613
FR-A- 1 134 206
FR-A- 1 204 083
FR-A- 1 302 481
FR-A- 2 159 812
NL-A- 6 712 499
SU-A- 727 910
SU-A- 727 910
SU-A- 953 288
US-A- 3 770 290
(deutsche Uebersetzung der SU-A-727910)
Dauermagnete, Schüler, Brinkmann 1970
S.602**

(73) Patentinhaber : **Deutsche Forschungs- und
Versuchsanstalt für Luft- und Raumfahrt e.V.
Linder Höhe Postfach 90 60 58
W-5000 Köln 90 (DE)**

(72) Erfinder : **Breitbach, Elmar, Dr.-Ing.
Bonhoefferweg 6
W-3400 Göttingen (DE)**

(74) Vertreter : **Patentanwälte Dipl.-Ing. Rudolf
Bibrach Dipl.-Ing. Elmar Rehberg
Pütterweg 6 Postfach 738
W-3400 Göttingen (DE)**

EP 0 127 741 B2

Jouve, 18, rue Saint-Denis, 75001 PARIS

**Beschreibung**

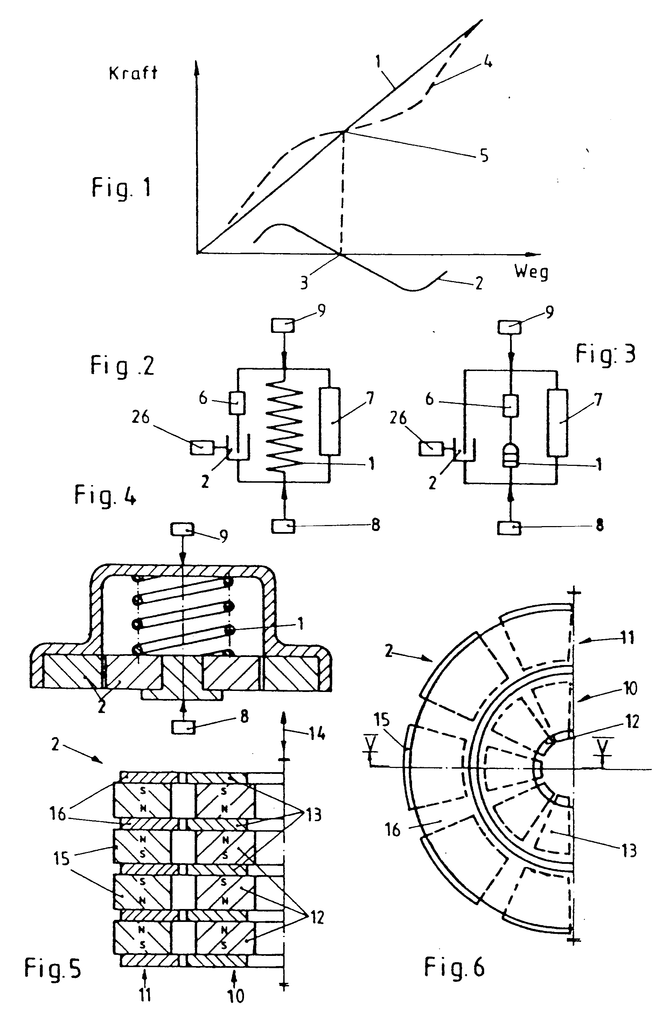

Die Erfindung bezieht sich auf ein zwischen dem ungefederten und dem gefederten Masseanteil eines Kraftfahrzeuges eingeschaltetes Federungssystem mit den Merkmalen aus dem Oberbegriff des Anspruches 1. Ein derartiges Federungssystem ist in der DE-A-1 805 789 dargestellt. Aus der DD-A-28 186 ist ein ähnliches Federungssystem bekannt, bei dem bereits eine Tragfeder und eine Korrekturfeder parallel geschaltet zueinander vorgesehen sind. Die Tragfeder besitzt positive Steifigkeit, d.h. mit der Zusammendrückung der Feder wächst die von der Feder abgegebene Kraft an. Dieses Anwachsen kann linear oder etwa linear erfolgen, so daß die Kennlinie der Tragfeder im Kraft-/ Weg-Diagramm (Fig. 3 der DD-A-28 186) eine mehr oder weniger gerade nach rechts ansteigende Linie darstellt. Die Tragfeder ist relativ steif ausgebildet und läßt nur begrenzte Federwege zu. Die Tragfeder ist in der Regel als gewickelte Schraubenfeder ausgebildet. Die Korrekturfeder des Federungssystems ist eine magnetische Feder. Sie besteht aus zwei Teilen, von denen der eine Teil mit den gefederten Massen, z. B. dem Fahrgestell, und der andere Teil mit den ungefederten Massen, z. B. den Rädern und Achsen verbunden ist. Der eine Teil besteht aus einem ringförmig aufgebauten Permanentmagneten (Fig. 1 der DD-A-28 186), bei dem abwechselnd Nord- und Südpole vorgesehen sind, die durch Lücken in dem Ring voneinander getrennt sind. Der andere Teil besteht aus einem Anker aus Weicheisen, der Vorsprünge und Einkerbungen aufweist. Der Anker aus Weicheisen besitzt selbst keine magnetischen Eigenschaften, sondern wird durch den Magnetfluß des anderen Teils je nach seiner Stellung entsprechend magnetisiert. Wenn die Vorsprünge des Ankers aus Weicheisen genau auf Lücke zwischen einem Nord- und Südpol stehen, wie dargestellt, befindet sich diese Magnetfeder in ihrem Arbeitspunkt in labilem Gleichgewicht. Die Vorsprünge des Ankers aus Weicheisen werden von den benachbarten Polen des Permanentmagneten mit gleich großen aber entgegengesetzt wirkenden Kräften angezogen. Eine kleine Verschiebung bzw. Verdrehung des Ankers aus Weicheisen führt dazu, daß labile Gleichgewichtslage verlassen wird und von den Polen des Permanentmagneten eine größer werdende Kraft, die in Richtung der Bewegung wirkt, auf die Vorsprünge ausgeübt wird. In der umgekehrten Drehrichtung geschieht dasselbe; auch bei einer solchen Drehung wächst die in Richtung der Bewegung wirkende Kraft. Diese Kraft ist bei einem Verdrehwinkel von ca. 22,5° am größten und fällt wieder auf Null ab, wenn die Vorsprünge des Ankers aus Weicheisen den Polen des Permanentmagneten genau gegenüberstehen, also nach einer Verdrehung von insgesamt 45°. Es wird dann eine stabile Gleichgewichtslage erreicht, d. h. eine Verdrehung aus dieser Stellung heraus läßt eine Kraft auf den Anker entstehen, der der Bewegungsrichtung entgegengesetzt gerichtet ist. Die gewünschte nicht-lineare Kennlinie des Federsystems aus der Tragfeder mit der parallelen Korrekturfeder wird also dadurch erzeugt, daß die polartigen Vorsprünge am Anker aus Weicheisen durch die jeweils unter 45° benachbart dazu angeordneten Pole eines Permanentmagneten angezogen werden. Die durch die Anziehung zwischen den Vorsprüngen aus Weicheisen und dem Permanentmagneten erzeugbaren Kräfte sind begrenzt und reichen für manche Anwendungsfälle nicht aus. Die gewünschte weiche Kennliniencharakteristik im Arbeitspunkt des Federungssystems läßt sich nämlich nur dann erzielen, wenn die negative Steifigkeit im Nulldurchgang der Korrekturfeder dem Betrage nach fast gleich groß wie die positive Steifigkeit der Tragfeder ist. Die negative Steifigkeit der Korrekturfeder bedeutet, daß ihre Kennlinie im Kraft-/Weg-Diagramm mit zunehmender Einfederung fällt, wobei im Arbeitspunkt des Federungssystems ein Nulldurchgang der Kennlinie der Korrekturfeder im Sinne eines labilen Gleichgewichtes vorgesehen sein muß. Der Nulldurchgang bedeutet, daß in diesem Arbeitspunkt die Korrekturfeder keine Kraft abgibt. Die erreichbare Steifigkeit, also die Größe der abfallenden Neigung der Kennlinie der Korrekturfeder im Kraft-/Weg-Diagramm ist bei der magnetischen Korrekturfeder der DD-A-28186 sehr beschränkt. Ein weiterer Nachteil besteht darin, daß bei Federbewegungen im Anker aus Weicheisen Wirbelströme entstehen, die zu einer erheblichen Erwärmung sowie zu einer Dämpfung führen, was oft als ungewollter Nebeneffekt betrachtet werden muß. Infolge der Ummagnetisierungen des Ankers aus Weicheisen bei federnden Bewegungen entsteht eine Kraft/Weg-Charakteristik, die mit höheren Schwingfrequenzen, wie sie für Federungen von Kraftfahrzeugen typisch sind, mit anwachsender zeitlicher Phasenverzögerung gegenüber dem stationären Fall abläuft. Dies kann sogar zu dynamischen Instabilitäten führen, was besonders nachteilig ist. Das bekannte Federungssystem muß eine Einrichtung zum Verstellen des Nulldurchgangs der Korrekturfeder aufweisen, denn die permanent magnetischen Pole des äußeren Ringteiles sollen in Bezug auf die polartigen Vorsprünge des Ankers aus Weicheisen oder umgekehrt verstellbar sein. Insbesondere sollen beide Teile im Ruhezustand des Fahrzeuges ie nach dessen Belastung auf Lücke, also im labilen Gleichgewicht, einstellbar sein.

Auch die DE-A-1 755 496 zeigt ein Federungssystem aus einer Tragfeder und einer dazu parallelgeschalteten Korrekturfeder. Die Korrekturfeder ist hier eine gewickelte Schraubenfeder, die im labilen Gleichgewicht ihre größte Zusammendrückung aufweist. Dabei wird eine Totpunktslage erreicht. Die Uberlagerung der Kennlinien der Tragfeder und der Korrekturfeder ergibt für das Federungssystem die gewünschte Weichheit der Charakteristik im Arbeitspunkt. Es sind verschiedene Arten von Verstelleinrichtungen gezeigt, um die Korrekturfeder je nach der Beladung des Fahrzeuges in ihre Totpunktslage einzustellen. Der Erfindung liegt die Aufgabe zugrunde, ein Federungssystem für Kraftfahneuge zu schaffen, welches bei geringem Eigengewicht einen verbesserten Fahrtkomfort im Vergleich zu bisher bekannten Federungen erbringt. Weiterhin soll eine Verringerung der Federwege durch statische Kräfte, z.B. bei Beladungsveränderungen des Kraftfahrzeuges, bei Kurvenfahrten, bei Beschleunigungs- und Verzögerungsvorgängen, bei Änderung von aerodynamischen Lasten u. dgl., erreicht werden.

Erfindungsgemäß wird dies durch die im kennzeichnenden Teil des Anspruchs 1 ersichtlichen Merkmale erreicht.

Durch die Ausstattung beider Teile der Korrekturfeder mit Permanentmagneten wird die magnetische Energie wesentlich besser konzentriert. Die Anordnung läßt insbes. die Verwendung anisotroper Stabmagnete hoher Energiedichte zu. Die Weicheisenstücke wirken fokussierend für den Magnetfluß und lenken diesen in eine Richtung senkrecht zur Bewegungsrichtung um. Damit ergibt sich im Arbeitspunkt des Federungssystems und entsprechend dem Nulldurchgang der Korrekturfeder eine konzentrierte Abstoßung in Richtung der Verschiebung. Die erreichbare Steifigkeit im Arbeitspunkt ist erheblich. Das Leistungs-/Gewichts-Verhältnis ist um mindestens eine Größenordnung besser als bei der prinzipiell andersartigen Anordnung der DD-A-28 186. Es findet keine Ummagnetisierung statt, weil die Weicheisenstücke jedes Teils der Korrekturfeder den eigenen aufgeprägten Magnetfluß führen.

Die Tragfeder ist zur Aufnahme der statischen sowie quasistatischen Kräfte und Momente bestimmt und vorgesehen. Die dynamischen Kräfte werden von dem Federungssystem aus Tragfeder und Korrekturfeder aufgenommen. Die Tragfeder kann im einzelnen ganz verschieden ausgebildet sein, beispielsweise als mechanische, pneumatische, hydropneumatische oder auch als elektrische Feder. Wesentlich ist, daß die Tragfeder eine etwa lineare Kennlinie und große positive Steifheit aufweist. Durch die grosse Steifheit ergeben sich relativ kleinere Federwege, d. h. selbst bei erhöhter Belastung erhält das Fahrzeug eine vergleichsweise geringere Schräglage, so daß beispielsweise eine komplizierte Scheinwerferverstellung entbehrlich werden kann. Zur Aufnahme der dynamischen Kräfte und Momente steht jedoch im Arbeitspunkt die geringe Steifigkeit des Federungssystems in und um den Nulldurchgang der Korrekturfeder zur Verfügung, so daß damit der Fahrkomfort bestimmt und die Weichheit des Federungssystems in diesem Punkte ausgenutzt wird.

Wenn es gelingt, eine Korrekturfeder einzusetzen, deren Federkennlinie parallel zum Federweg derart gespreizt bzw. auseinandergezogen ist, daß die resultierende Federkennlinie des Federungssystems im wesentlichen alle vorkommenden Belastungsfälle überdeckt, dann kann es entbehrlich sein, eine Einrichtung zum Messen des Arbeitspunktes des Federungssystems und zum Verstellen des Nulldurchgangs der Korrekturfeder relativ zu dem Arbeitspunkt vorzusehen. Im allgemeinen ist es jedoch erforderlich, daß der Nulldurchgang der Korrekturfeder und der durch die stationären Kräfte und Momente definierte Arbeitspunkt des Federungssystems in jeder Gleichgewichtslage zwischen dem gefederten und dem ungefederten Masseanteil zur Deckung gebracht werden. Dabei wird entweder der Nulldurchgang der Korrekturfeder dem Arbeitspunkt des Federungssystems nachgeführt oder umgekehrt. Diese Einrichtung zum Nachführen bzw. Verstellen ist in der Regel innerhalb des Federungssystems mit der Korrekturfeder in Reihe geschaltet. Es gibt jedoch auch andere Möglichkeiten. So kann die Einrichtung auch in Reihe zu der Tragfeder angeordnet sein, die besonders einfach dann als pneumatische Federausgebildet wird. Durch diese Einrichtung zum Messen des Arbeitspunktes des Federungssystems und zum Verstellen des Nulldurchgangs der Korrekturfeder relativ zum Arbeitspunkt des Federungssystems tritt der Vorteil auf, daß trotz unterschiedlicher Beladungszustände der im wesentlichen gleiche Fahrkomfort erreicht wird. Dies bedeutet, daß das Federungssystem etwa gleiches Federverhalten zeigt, gleichgültig, ob das Fahrzeug wenig oder maximal beladen ist. Für diese Verstellung bzw. Nachführung kann selbstverständlich auch ein Regelkreis eingesetzt werden, indem sich natürlich auch die Einrichtung zum Messen des Arbeitspunktes befindet. Wie schon ausgeführt, ist es auch möglich, den Arbeitspunkt des Federungssystems dem Nulldurchgang der Korrekturfeder nachzuführen. Dies ist beispielsweise dann der Fall, wenn als Tragfeder eine pneumatische Feder mit einem Niveauregelventil eingesetzt wird, wie dies bei Lastkraftwagen und insbes. Omnibussen der Fall ist. Das Niveauregelventil stellt auch beim Zusteigen bzw. Aussteigen von Fahrzeugpassagieren die Relativlage des gefederten Fahrzeugaufbaus zur ungefederten Achse wieder her, so daß die dazu parallelgeschaltete Korrekturfeder immer in ihrem Nulldurchgang bzw. um diesen herum arbeiten kann.

Die wesentlichen Vorteile des erfindungsgemäßen Federungssystems sind in dem einfachen konstruktiven Aufbau, im geringen Gewicht und in den geringen Abmessungen der eingesetzten Teile zu sehen. Auch wenn die Tragfeder als Schraubenfeder ausgebildet wird, kann diese im Vergleich zu bisher eingesetzten Schraubenfedern eineerheblich verringerte Länge aufweisen, so daß sie sich auch viel einfacher und platzsparender insbes in einem Personenkraftwagen unterbringen läßt. Trotz dieser Eigenheiten leidet jedoch der Fahrkomfort nicht; überraschenderweise kann er im Vergleich zu bisher bekannten Federungssystemen wesentlich verbessert werden, weil sich nämlich die relativ große negative Steifheit der Korrekturfeder im Federungssystem steifigkeitsvermindernd auswirkt, wobei selbst der Fall verschwindender Steifigkeit im Arbeitspunkt des Federungssystemsohne weiteres erreichbar ist. Da keine Verschleißteile vorhanden sind, ergibt sich auch eine lange Lebensdauer und eine geringe Reparaturanfälligkeit, d.h. eine hohe mechanische Beständigkeit des Federungssystems. Da die Tragfeder im Vergleich zu den bekannten Federbeivnen um ein Mehrfaches steifer ausgelegt werden kann, ohne daß die für eine gute Störunterdrückung erforderliche geringe Steifigkeit im Arbeitspunkt in irgendeiner Weise beeinträchtigt wird, ergeben sich durch die geringere statische Einfederung auch die entsprechenden Vorteile hinsichtlich der Wirkung äußerer Lasten auf den Fahrzeugaufbau. Dieser Fahrzeugaufbau besitzt somit eine äußerst günstige Stabilität, d.h. die Federwege sind grundsätzlich reduziert, so daß z. B. auch Neigungseinstellungen der Fahrzeugkarosserie zum anströmenden Fahrtwind geringer ausfallen. Damit ist auch die Bodenhaftung des Fahrzeugs verbessert. Das Fahrzeug liegt zwar "wie ein Brett" auf der Fahrbahn, besitzt jedoch im Arbeitspunkt entsprechend der jeweiligen statischen Belastung ein weiches Verhalten, also einen erhöhten Fahrkomfort. Das erfindungsgemäße Federungssystem ermöglicht es, in einfacher Weise den Arbeitspunkt dem Nulldurchgang oder umgekehrt nachzuführen bzw. jeweils eine Neutralstellung an jeweils wechselnde statische Betriebslasten anzupassen. Dabei treten im letzteren Fall immer nur extrem geringe Nachführkräfte auf, die um etwa 2 Größenordnungen kleiner sind als die einwirkenden statischen Kräfte.

Die konstruktive Ausbildung des Federungssystems kann in verschiedener Weise erfolgen. Wenn die Merkmale des Anspruches 2 (Fig. 5 und 6) verwirklicht werden, ergibt sich eine sehr kompakte Bauweise bei geradlinigem Federweg. Die Permanentmagnete sind auf die Ringscheiben aus den Weicheisen aufgeklebt, so daß die Ringscheiben nicht nur die Fokussierwirkung mitbringen, sondern gleichzeitig auch die Permanentmagnete halten und führen.

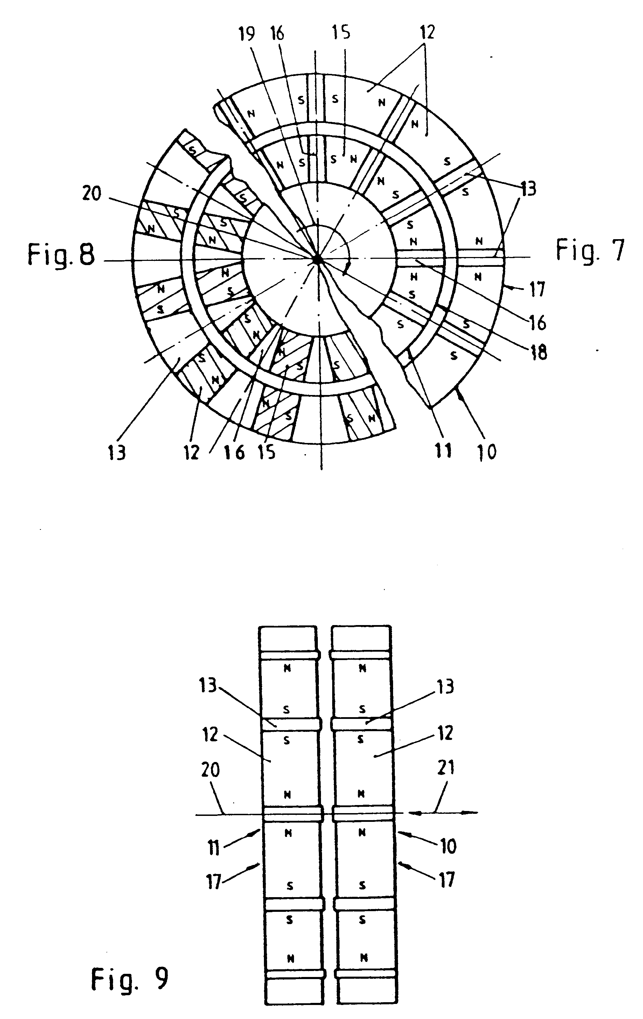

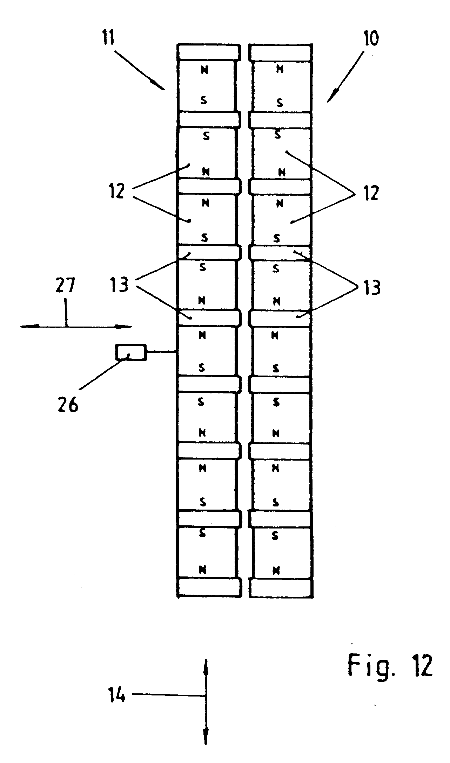

Gemäß den Merkmalen des Anspruchs 3 kann eine Drehfeder realisiert werden, die also dann eingesetzt wird, wenn der ungefederte Masseanteil eine Drehbewegung um eine Achse an der Fahrzeugkarosserie ausführen soll. Gleiches gilt für die Verwirklichung des Anspruches 4. Dabei tritt der besondere Vorteil auf, daß die beiden Teile gleich groß ausgebildet sein können und sich infolge der Identität eine vereinfachte Fertigung ergibt (Fig. 9). Die Permanentmagnete lassen sich aber auch gemäß den Merkmalen des Anspruches 5 (Fig. 12) geradlinig anordnen. Dieser Aufbau ist besonders einfach. Er ermöglicht eine geradlinige Federbewegung. Die Permanentmagnete im einzelnen könnnen gemäß den Merkmalen des Anspruches 6 mit trapezförmigem Grundriß oder sektorartig oder aber auch quaderartig als allseits rechtwinklig begrenzte Teile ausgebildet sein.

Wenn man gemäß dem Merkmal des Anspruches 7 die Entfernung der beiden Teile zueinander verändert, verändert man damit die abstoßende Wirkung der Teile der Korrekturfeder und somit deren Steifheit. Damit wird dann letztendlich auch die Weichheit des Federungssystems beeinflußt. Die Veränderung der Entfernung kann geschwindigkeitsabhängig durchgeführt werden, um bei jeder Fahrzeuggeschwindigkeit gleichbleibenden Fahrkomfort durch weiche Federung zu haben, ohne Verschlechterung der durch die steife Tragfeder gegebenen Stabilität des Fahrzeugaufbaus. Die gleiche oder ähnliche Wirkung kann auch dann erreicht werden, wenn die Merkmale des Anspruches 8 verwirklicht werden. Auch dabei ist eine Einrichtung zur Veränderung der gegenüberstehenden Wirkflächen der Pole bzw des Abstandes der Pole erforderlich. Diese zweite Einrichtung arbeitet immer senkrecht (rechtwinklig) zu der Einrichtung zum Verstellen des Nulldurchgangs.

Wenn die Merkmale des Anspruches 9 verwirklicht werden, kann der Fahrkomfort besonders gesteigert werden. Für die Realisierung der Einrichtung zum Verstellen des Nulldurchgangs ergeben sich gemäß den Merkmalen des Anspruches 10 verschiedene Möglichkeiten. Es versteht sich, daß dieser Verstelleinrichtung immer auch eine Meß- bzw. Fühleinrichtung für die Auslenkung des Federsystems oder der Tragfeder allein zugeordnet ist.

Die Erfindung wird anhand der Zeichnungen weiter verdeutlicht. Es zeigt:

Fig. 1 ein Kraft-/Weg-Diagramm der Kennlinien der verschiedenen Federn,

Fig. 2 ein Blockschaltbild des Federungssystems in einer ersten Ausführungsform,

Fig. 3 ein Blockschaltbild des Federungssystems in einer zweiten Ausführungsform,

Fig. 4 einen schematisierten Querschnitt durch das Federungssystem,

Fig. 5 einen Halbschnitt durch eine erste Ausführungsform der Korrekturfeder gemäß der Linie V-V in Fig. 6,

Fig. 6 eine Draufsicht auf die Korrekturfeder gemäß Fig. 5,

Fig. 7 eine Seitenansicht auf eine zweite Ausführungsform der Korrekturfeder als Drehfeder,

Fig. 8 eine Draufsicht auf eine dritte Ausführungsform der Korrekturfeder als Drehfeder,

Fig. 9 eine Stirnansicht einer vierten Ausführungsform der Korrekturfeder als Drehfeder,

Fig. 10 eine schematisierte Darstellung einer abgewandelten Ausführungsform der Korrekturfeder gemäß den Fig. 5 und 6 in einer ersten Stellung,

Fig. 11 eine schematisierte Darstellung einer abgewandelten Ausführungsform der Korrekturfeder gemäß den Fig. 5 und 6 in einer zweiten Stellung und

Fig. 12 eine schematisierte Seitenansicht der Korrekturfeder für geradlinige Bewegung.

Fig. 1 zeigt ein Diagramm der Kraft über dem Weg. Es sind die Kennlinien der Tragfeder 1 und der Korrekturfeder 2 in durchgezogener Linienführung dargestellt. Die Kennlinie, also die Steifigkeit der Tragfeder 1 ist positiv und linear. Sie steigt relativ steil an, woraus man erkennt, daß eine relativ steife Tragfeder 1 vorliegt. Die Kennlinie der Korrekturfeder 2 ist nicht linear. Sie besitzt einen Nulldurchgang 3, der einen Punkt, in welchem keine Kraft (Kraft = 0) von der Korrekturfeder auf die mit dem Federungssystem abgestützten Teile ausgeübt wird. Im Bereich um diesen Nulldurchgang 3 liegt eine negative Steifigkeit vor. Durch Addition der Kennlinien ergibt sich die gestrichelte Kennlinie, die für das Federungssystem 1, 2 aus der Parallelschaltung der Tragfeder 1 und der Korrekturfeder 2 entsteht.

Es entsteht die Kennlinie 4 des Federungssystems mit ihrem Arbeitspunkt 5. Der Arbeitspunkt 5 wird durch den Nulldurchgang 3 der Korrekturfeder 2 bestimmt bzw. festgelegt. Man erkennt, daß die resultierende Kennlinie 4 im Arbeitspunkt 5 eine sehr kleine Steigung aufweist, daß also das Federungssystem 1, 2 eine relativ niedrige Steifheit an dieser Stelle besitzt, so daß die Federung hier relativ weich ist und großen Fahrtkomfort bereithält. Über den durch den Arbeitspunkt 5 festgelegten Arbeitsbereich hinaus besitzt das Federsystem jedoch wieder eine große Steifheit.

Fig. 2 verdeutlicht den Aufbau der Federung in ihrer bevorzugten Ausführungsform. Die Tragfeder 1 besteht aus einer mechanischen Feder, also einer Schraubenfeder, die jedoch vergleichweise steif ausgebildet ist und eine relativ kurze Bauhöhe besitzt. Die dazu parallelgeschaltete Korrekturfeder 2 ist eine nicht-lineare Magnetfeder. Eine Einrichtung 6 dient zum Nachführen des Nulldurchgangs 3 der Korrekturfeder 2 also zum Verschieben des Nulldurchgangs 3 relativ zu dem Arbeitspunkt 5 des Federungssystems. Es ist eine zweite Einrichtung 26 vorgesehen, die an der Korrekturfeder 2 angreift und dazu dient, entweder den Abstand der Pole der Weicheisenstücke oder die Wirkfläche der Pole zu verändern. Diese zweite Einrichtung 26 arbeitet immer senkrecht zu der Arbeitsrichtung der ersten Einrichtung 6. Da das Federungssystem je nach Beladung des Kraftfahrzeuges unendlich viele Arbeitspunkte 5 einnehmen kann, kommt es darauf an, den Nulldurchgang 3 mit dem jeweiligen Arbeitspunkt 5 zur Deckung zu bringen. Parallel zu dem Federungssystem 1, 2 ist zweckmäßig noch ein üblicher Stoßdämpfer 7 vorgesehen. Dieser kann jedoch auch fehlen. Das Federungssystem 1, 2 ist zwischen den ungefederten Massen 8 bzw dem jeweiligen Masseanteil und den gefederten Massen 9 bzw. dem jeweiligen Masseanteil eingeschaltet. Die ungefederten Massen 8 verkörpern insbes die Räder und Achsen bzw Achsenteile, während in der gefederten Masse 9 der Karosserieaufbau zu erkennen ist. Die Einrichtung 6 ist in Reihe mit der Korrekturfeder 2 geschaltet, um deren Nulldurchgang 3 anzupassen. Die hierzu erforderlichen Kräfte sind sehr klein, so daß übliche Stellmotore elektrischer oder hydraulischer Art durchaus eingesetzt werden können.

Fig. 3 unterscheidet sich von Fig. 2 an sich nur dadurch, daß die Einrichtung 6 in Reihe mit der Tragfeder 1 innerhalb der Parallelschaltung vorgesehen ist. Die Tragfeder 1 ist hier z.B. eine pneumatische Feder, wie sie an Omnibussen und anderen Nutzfahrzeugen eingesetzt wird Über eine nicht dargestellte Niveauregeleinrichtung wird der Arbeitspunkt der Tragfeder 1 so verstellt, daß er unabhängig von der Beladung des Fahrzeugaufbaus immer die gleiche Relativlage zu den ungefederten Massen 8 einnimmt. Damit ist es möglich, die Korrekturfeder 2 fest und ohne eine Einrichtung zum Nachführen des Arbeitspunktes anzuordnen. Die ohnehin erforderliche Niveauregeleinrichtung wird hier als Einrichtung 6 zum Verstellen des Arbeitspunktes 5 benutzt.

Fig. 4 zeigt eine mehr konstruktive Ausführung des Federungssystems 1, 2 aus der Tragfeder 1 und der Korrekturfeder 2, die als Magnetfeder ausgebildet ist. Die Einrichtung 6 ist hier nicht dargestellt. Man erkennt jedoch sehr gut, welch geringe Bauhöhe das Federungssystem 1, 2 aufweist, wie einfach der konstruktive Aufbau gestaltet werden kann und welch ein geringes Gewicht das Federungssystem 1, 2 besitzt.

Die Fig. 5 und 6 verdeutlichen den Aufbau der Korrekturfeder 2 als Magnetfeder, und zwar in einer achssymmetrischen Ausführung. Die Korrekturfeder 2 besitzt die beiden Teile 10 und 11. Der eine Teil 10 ist beispielsweise mit der gefederten Masse 9 und der andere Teil 11 mit der ungefederten Masse 8 verbunden bzw. umgekehrt. Der Teil 10 besteht aus mehreren in Bewegungsrichtung hintereinandergeschalteten Permanentmagneten 12, die als Permanentmagnetsegmente ausgebildet sind und die angegebene Magnetisierung aufweisen. Die einzelnen Permanentmagneten 12 sind durch Weicheisenzwischenstücke 13 voneinander getrennt, die der Fokussierung der Magnetfelder dienen. Die Permanentmagnete 12 und die Weicheisenzwischenstücke 13 sind über den gesamten Umfang verteilt angeordnet. Die Weicheisenzwischenstücke können als durchgehende Ringe vorgesehen sein. Die Magnetisierungsachsen der Permanentmagnete 12 sind parallel zur Bewegungsrichtung 14 angeordnet. Die Pole der Permanentmagneten 12 sind so angeordnet, daß jeweils zwei aufeinanderfolgende Permanentmagnete 12 mit den gleichnamigen Polen einander zugekehrt an das jeweilige Weicheisenzwischenstück 13 angrenzen.

Gleiches gilt für das Teil 11. Hier sind Permanentmagnete 15 und Weicheisenzwischenstücke 16 vorgesehen. Man erkennt sehr gut anhand von Fig. 5 den indifferenten (labilen) Gleichgewichtszustand, also den Nulldurchgang 3 der Korrekturfeder 2. Die Weicheisenstücke 13 und 16 stehen sich auf gleicher Höhe relativ

EP 0 127 741 B2

zur Bewegungsrichtung 14 direkt gegenüber. Der sich unter Last auf das Federungssystem 1, 2 einstellende Arbeitspunkt muß mit diesem Nulldurchgang der Korrekturfeder 2 zusammenfallen, so daß der Nulldurchgang der Korrekturfeder 2 in den sich unter Last einstellenden Arbeitspunkt 5 des Federungssystems 1, 2 hineinverstellt werden muß. In der in Fig. 5 dargestellten Position bilden die äußeren Ränder der inneren Weicheisenzwischenstücke 13 gemeinsam mit den unmittelbar gegenüberliegenden inneren Rändern der äußeren Weicheisenzwischenstücke 16 Polpaare gleicher, d. h. einander abstoßender Polarität. Die zwischen den Weicheisenzwischenstücken 13, 16 angeordneten Permanentmagneten 12, 15 sind in einfacher Weise axial magnetisiert.

Die in Fig. 7 dargestellte Korrekturfeder 2 ist als Drehfeder ausgebildet. Aus Permanentmagneten 12 und Weicheisenzwischenstücken 13 ist ein äußerer Ring 17 gebildet. Gleichnamige Pole benachbarter Permanentmagneten 12 grenzen dabei an ein Weicheisenstück 13 an. In gleicher Weise ist aus Permanentmagneten 15 und Weicheisenzwischenstücken 16 ein innerer Ring 18 gebildet, wobei sich die Ringe 17 und 18 gemäß Pfeil 19 um eine Drehachse 20 ßegeneinander verdrehen können. Entweder ist der äußere Ring 17 ortsfest und der innere Ring 18 dreht sich relativ dazu oder umgekehrt. Der Nulldurchgang 3 entsprechend dem labilen Gleichgewicht ist in der gezeigten Relativlage erreicht, wenn die Weicheisenscheiben 13 und 16 einander direkt Begenüberstehen. Die Permanentmagnete 12 und 15 sind sektor- bzw. trapezförmig ausgebildet und können sich zusammen mit den zugehörigen Weicheisenscheiben 13 bzw. 16 über jeweils 30° des Umfangserstrecken. Es versteht sich, daß eine regelmäßige Anordnung über den gesamten Umfanf vorgesehen ist. Die Einrichtung arbeitet in Richtung der Drehachse 20, indem die Ringe 17 u. 18 gegeneinander verschoben werden so daß sie sich nur teilweise überdecken. Die Einrichtung 6 arbeitet in Richtung des Pfeils 19.

Fig. 8 zeigt eine ähnliche Ausführungsform wie Fig. 7. Die Permanentmagnete 12 und 15 sind hier jedoch quaderförmig ausgebildet, während die Weicheisenzwischenstücke 13 und 16 sektorartig geformt sind.

Bei der Ausführungsform gemäß Fig. 9 besteht die Korrekturfeder 2 nicht aus zwei konzentrischen Ringen 17 u. 18, sondern aus zwei identischen Ringen 17, die um die Drehachse 20 gegeneinander gestellt vorgesehen sind. Diese Ausführungsform der Korrekturfeder 2 hat den Vorteil, daß die beiden Teile 10 und 11 identisch ausgebildet sind, so daß sich eine vereinfachte Herstellung ergibt. Außerdem ist die Möglichkeit gegeben, den einen Ring 17 gegenüber dem anderen Ring 17 in Richtung der Drehachse 20, also entsprechend dem Pfeil 21 durch die zweite Einrichtung 26 zu verstellen, wodurch sich eine unterschiedliche Annäherung der beiden Ringe 17 aneinanderergibt. Damit wird gleichsam die Steifheit der Korrekturfeder verändert. Diese Veränderung kann während der Fahrt geschwindigkeitsabhängig durchgeführt werden, um bei allen Geschwindigkeiten gleich hohen Fahrkomfort ohne Reduzierung der Stabilität zu gewährleisten D. h. beiniedrigen Geschwindigkeiten soll das Federungssystem 1, 2 besonders weich abgestimmt sein. Bei hohen Fahrzeuggeschwindigkeiten werden die beiden Ringe 17 einander angenähert, um die Steifheit der Korrekturfeder 2 anzuheben und somit die Kennlinie des Federungssystems härter zu machen, weil bei höheren Geschwindigkeiten die dynamischen Lasten mit höheren Frequenzen auf das Fahrzeug einwirken.

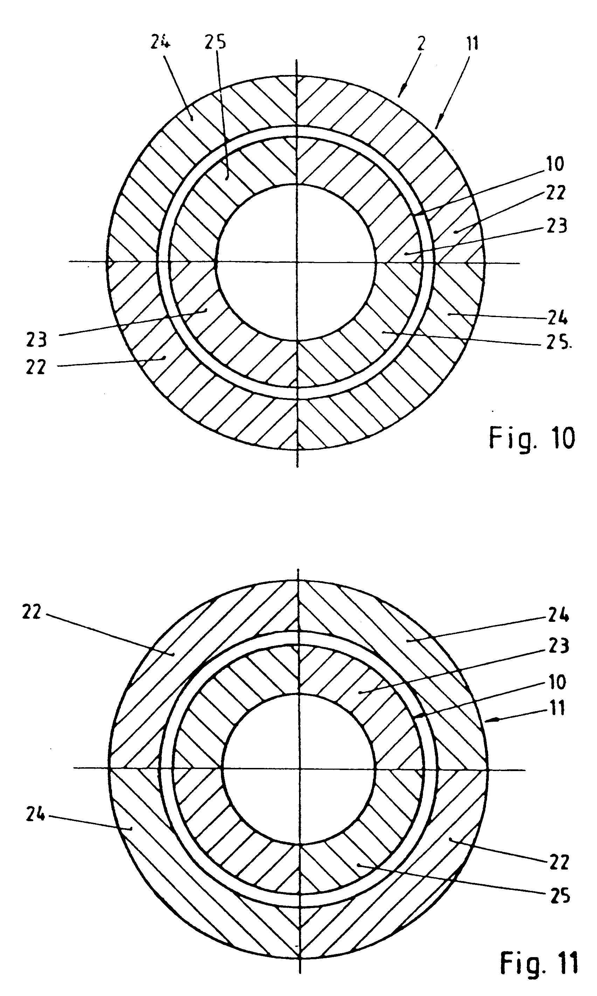

Eine weitere Möglichkeit der Realisierung der Korrekturfeder 2 mit der Möglichkeit der Veränderung der Kennlinie wird anhand der Fig. 10 und 11 verdeutlicht. Dieser schematische Aufbau ist ähnlich wie bei der Ausführungsform der Fig. 5 u. 6. Lediglich sind die Permanentmagnete 12 und 15 sowie die zugehörigen Weicheisenzwischenstücke 13 und 16 nicht über den ganzen Umfang verteilt, sondern nur über zwei Viertel 22 und 23 des Umfangs, und zwar in gegenüberliegender Bauweise, wie es aus Fig. 10 ersichtlich ist. Die übrigen zwei Viertel 24 und 25 bestehen aus magnetisch nicht aktivem und elektrisch nicht leitendem Material, z. B. Kunststoff. Die Viertel 24 und 25 sind also nicht mit Permanentmagneten 12, 15 oder Weicheisenzwischenstücken 13, 16 besetzt. Es versteht sich, daß die Anordnung auch in anderer Weise ald durch Bildung von vier Vierteln 22 bis 25 an jedem Ring erreicht werden kann, z. B. indem sich die mit den Permanentmagneten 12, 15 und Weicheisenzwischenstücken 13, 16 besetzten Umfangsteile nicht über 90, sondern über 60° erstrecken. Fig. 10 zeigt nun die Relativlage, in der die magnetische Korrekturfeder 2 ihre größte Wirkung entfaltet, also ihre größte Steifheit aufweist. Fig. 11 zeigt hingegen die magnetisch voll inaktive Stellung, bei der den magnetisch aktiven Vierteln 22 und 23 immer inaktive Viertel 24 und 25 gegenüberstehen. Die Wirkung der Korrekturfeder 2 ist in diesem Zustand (entsprechend hoher Fahrgeschwindigkeit) ausgeschaltet. Im Arbeitspunkt 5 ergibt sich somit die Kennlinie des Federungssystems 1,2 entsprechend der Tragfeder 1. Es versteht sich, daß auch Zwischenstellungen zwischen den Fig. 10 und 11 möglich sind, so daß der Einfluß der Korrekturfeder 2 auf die Kennlinie des Federungssystems 1, 2 kontinuierlich oder in Stufen ausgeschaltet werden kann.

Fig. 12 zeigt eine Seitenansicht einer weiteren Realisierungsmöglichkeit der Korrekturfeder 2. Die Permanentmagnete 12 und die Weicheisenzwischenstücke 13 sind dabei in Quaderform säulenartig aufgebaut, so daß auf diese Art une Weise das eine Teil 10 der Korrekturfeder 2 gebildet ist. Das andere Teil 11 ist genau in der gleichen Art und Weise und mit gleichen Dimensionen aufgebaut. Das Teil 10 möge beispielsweise ortsfest vorgesehen sein, während sich das Teil 11 dazu in der Bewegungsrichtung 14 verschieben kann. Die Bewegung erfolgt also hier geradlinig wie auch bei dem Beispiel der Fig. 5 und 6. Die gesamte Länge der Teil

6

10 und 11 kann abwechseln mit Permanentmagenten 12 und Weicheisenzwischenstücken 13 besetzt bzw. aus solchen aufgebaut sein, wobei beide Teile 10 und 11 gleiche Länge in der Bewegungsrichtung 14 aufweisen. Die Einrichtung 6 zur Verstellung des Nulldurchgangs 3 arbeitet in Bewegungsrichtung 14. Die Einrichtung 26 kann in zwei verschiedenen Richtungen wirkend vorgesehen sein. Mit ihr läßt sich einmal der Abstand der Teile 10 und 11 gegeneinander gemäß Pfeil 27 verändern, wodurch die Steifheit der Korrekturfeder 2 variiert wird. Eine zweite Möglichkeit besteht darin, die Einrichtung 26 senkrecht zur Zeichenebene an dem Teil 11 angreifen zu lassen, wodurch zwar der Abstand zwischen der Teilen 10 und 11 konstant bleibt, aber die Überdeckung der Pole geändert wird. Unter der Veränderung der Überdeckung der Pole wird eine Veränderung der Wirkfläche der Pole verstanden.

## Patentansprüche

1. Zwischen dem ungefederten (8) und dem gefederten (9) Masseanteil eines Kraftfahrzeuges eingeschaltetes Federungssystem, aus einer mechanischen, pneumatischen oder hydraulischen Tragfeder (1) mit positiver relativ großer Steifheit, aus einer dazu parallel angeordneten, magnetisch ausgebildeten und im labilen Gleichgewicht stehenden Korrekturfeder (2) mit negativer Steifigkeit in einem Nulldurchgang (3) ihrer Kraft-/Weg-Charakteristik, und ggfs. aus einem ebenfalls parallel engeordneten Stoßdämpfer (7), sowie mit einer Einrichtung (6) zum Messen des Arbeitspunktes (5) des Federungssystems gegenüber der normalen Höhenlage des Fahrzeuges über der Fahrbahn infolge stationärer Lasten und zum Verstellen des Nulldurchgangs (3) der Korrekturfeder relativ zu dem Arbeitspunkt, wobei die Korrekturfeder zwei jeweils mit Permanentmagneten (12, 15) ausgestattete Teile (10, 11) aufweist, von denen der eine Teil mit dem gefederten und der andere Teil mit dem ungefederten Masseanteil verbunden ist, und die Permanentmagnete an den Teilen der Korrekturfeder jeweils in Bewegungsrichtung hintereinander geschaltet sind, dadurch gekennzeichnet, daß zwischen den Permanentmagneten (12, 15) an jedem Teil (10, 11) der Korrekturfeder (2) auf dne Magnetfluß fokussierendwirkende Weicheisenzwischenstücke (13, 16) angeordnet sind, daß die Pole benachbarter Permanentmagnete an den Weicheisenzwischenstücken gleichnamig aneinandergrenzen und die Magnetisierungsachsen der Permanentmagnete parallel zur Bewegungsrichtung (14) angeordnet sind, und daß die Anordnung so getroffen ist, daß der durch die Weicheisenzwischenstücke (13, 16) senkrecht zur Bewegungsrichtung (14) umgelenkte Magnetfluß Pole an den Weicheisenzwischenstücken der beiden Teile (10, 11) der Korrekturfeder (2) erzeugt, die gleichnamig auf Abstoßung im labilen Gleichgewicht einander in gleicher Höhe bezüglich der Bewegungsrichtung (14) gegenüberstehen.

2. Federungssystem nach Anspruch 1, dadurch gekennzeichnet, daß die Permanentmagnete (12, 15) der beiden Teile (10, 11) je auf konzentrisch angeordneten Ringscheiben aus dem Weicheisen angeordnet sind und die Bewegung in Richtung der Achse der Ringscheiben erfolgt (Fig. 5, 6).

3. Federungssystem nach Anspruch 1, dadurch gekennzeichnet, daß zur Realisierung einer Drehfeder die Permanentmagnete (12, 15) und Weicheisenzwischenstücke (13, 16) abwechselnd zu zwei konzentrischen Ringen (17, 18) miteinander verbunden sind, und daß die Achse der Ringe (17, 18) die Drehachse (20) bildet (Fig. 7, 8).

4. Federungssystem nach Anspruch 1, dadurch gekennzeichnet, daß zur Realisierung einer Drehfeder die Permanentmagnete (12, 15) und die Weicheisenzwischenstücke (13, 16) der beiden Teile (10, 11) zu zwei identisch aufgebauten Ringen (17, 17) aufgebaut sind, die mit gleicher Achse einander symmetrisch gegenüberstehend angeordnet sind. (Fig. 9)

5. Federungssystem nach Anspruch 1, dadurch gekennzeichnet, daß die Permanentmagnete (12, 15) und die Weicheisenzwischenstücke (13, 16) paketartig in geradliniger Richtung angeordnet sind (Fig. 12)

6. Federungssystem nach Anspruch 2, 3, 4 oder 5, dadurch gekennzeichnet, daß die Permanentmagnete (12, 15) trapezförmig, sektorartig oder quaderartig ausgebildet sind.

7. Federungssystem nach Anspruch 1, dadurch gekennzeichnet, daß die gegenseitig Entfernung der beiden Teile (10, 11) veränderbar ist.

8. Federungssystem nach Anspruch 1, dadurch gekennzeichnet, daß die Permanentmagnete (12, 15) nur auf einem Teil des Umfangs oder einem Teil ihrer geradlinigen Anordnung vorgesehen sind, während ein anderer Umfangsteil bzw. Anordnungsteil frei von Permanentmagneten gehalten ist, und daß eine Einrichtung (26) zur Veränderung der gegenüberstehenden Wirkflächen der Pole oder des Abstandes der Pole vorgesehen ist.

9. Federungssystem nach Anspruch 1, dadurch gekennzeichnet, daß der Betrag der negativen Steifigkeit der Koirekturfeder (2) geringfügig kleiner als der Betrag der positiven Steifigkeit der Tragfeder (1) ist.

10. Federungssystem nach Anspruch 1, dadurch gekennzeichnet, daß die Einrichtung (6) zum Verstellen des Nulldurchgangs (3) ein elektrisches, pneumatisches oder hydraulisches Stellglied aufweist.

**Claims**

1. Suspension system which is interposed between the portions of a motor vehicle which respectively constitute the unsprung mass (8) and the sprung mass (9), this suspension system comprising a suspension spring (1) which may be mechanical, pneumatic or hydraulic, and which exhibits a relatively high degree of positive stiffness, comprising a compensating spring (2) which is arranged parallel to the suspension spring, this compensating spring being of magnetic design and being in a state of unstable equilibrium, exhibiting negative stiffness on passing through a positive/negative crossover point (3) on its force/deflection curve, and further comprising, if appropriate, a shock absorber (7) which is likewise arranged parallel to the suspension spring, this suspension system also including a device (6) which is designed to measure its operating point (5), as conditioned by non-varying loads, this measurement being referred to the normal level of the vehicle above the road surface, while this device is also designed to permit adjustment of the positive/negative crossover point (3) of the compensating spring, relative to the operating point, the compensating spring itself possessing two elements (10, 11) each of which is equipped with permanent magnets (12, 15), one of these elements being connected to the portion constituting the sprung mass and the other being connected to the portion constituting the unsprung mass, while the permanent magnets on these compensating-spring elements are, in each case, linked in an arrangement which is sequential in the movement direction, characterized in that soft iron spacers (13, 16) having a focusing effect on the magnetic flux are installed between the permanent magnets (12, 15) on each element (10, 11) of the compensating spring (2), in that the poles of neighbouring permanent magnets on the soft iron spacers are adjacent, one to another, in a like-to-like arrangement, while the axes of magnetization of the permanent magnets are aligned with the movement direction (14), and in that the arrangement is such that the soft iron spacers (13, 16) deflect the magnetic flux, causing it to run at right angles to the movement direction (14) and to create poles on the soft iron spacers with which the two elements (10, 11) of the compensating spring (2) are provided, these poles facing one another, like-to-like and repelling one another, in unstable equilibrium at the same level in relation to the movement direction (14).

2. Suspension system according to Claim 1, characterized in that the permanent magnets (12, 15) belonging to the two elements (10, 11) are in each case installed on annular discs which are composed of the soft iron and are arranged concentrically, the movement occurring in the direction corresponding to the axis of the annular discs (Figs. 5, 6).

3. Suspension system according to Claim 1, characterized in that, in order to produce a torsion spring, the permanent magnets (12, 15) and soft iron spacers (13, 16) are interconnected, in an alternating arrangement, so as to form two concentric rings (17, 18), and in that the axis of the rings (17, 18) forms the axis of rotation (20) (Figs. 7, 8).

4. Suspension system according to Claim 1, characterized in that, in order to produce a torsion spring, the permanent magnets (12, 15) and the soft iron spacers (13, 16) making up the two elements (10, 11) are assembled so as to form two rings (17, 17), which are of identical construction and are installed coaxially, facing each other in a symmetrical arrangement (Fig. 9).

5. Suspension system according to Claim 1, characterized in that the permanent magnets (12, 15) and soft iron spacers (13, 16) are assembled in a manner whereby they form a stack-like, straight-line arrangement (Fig. 12).

6. Suspension system according to any of Claims 2, 3, 4 or 5, characterized in that the permanent magnets (12, 15) are given shapes which may be trapezoidal, sector-like or cuboidal.

7. Suspension system according to Claim 1, characterized in that the distance between the two elements (10, 11) can be varied.

8. Suspension system according to Claim 1, characterized in that the permanent magnets (12, 15) are provided only on a part of the periphery, or on a part of their straight-line arrangement, while another part of the periphery, or of the arrangement, as the case may be, is kept free of permanent magnets, and in that a device (26) is provided for the purpose of varying the effective areas of the poles, these being the areas which face one another, or for the purpose of varying the distance between the poles.

9. Suspension system according to Claim 1, characterized in that the value describing the negative stiffness of the compensating spring (2) is slightly smaller than the value describing the positive stiffness of the suspension spring (1).

10. Suspension system according to Claim 1, characterized in that the device (6) for adjusting the positive/negative crossover point (3) possesses a control actuator which may be electric, pneumatic or hydraulic.

**Revendications**

1. Système de suspension élastique intercalé entre la partie non montée sur ressorts (8) et la partie (9) montée sur ressort de la masse d'un véhicule automobile, comprenant un ressort porteur (1) mécanique, pneumatique ou hydraulique à rigidité positive relativement élevée, un ressort correcteur (2) disposé parallèlement au premier, réalisé magnétiquement, placé en équilibre instable en rigidité négative, et dont la courbe caractéristique force/trajet traverse un point zéro (3) et, le cas échéant, un amortisseur (7) disposé également parallèlement, comprenant également un dispositif (16) pour mesurer le point de fonctionnement (5) du système de suspension par rapport à la position de hauteur normale du véhicule au-dessus de la chaussée consécutivement à la présence de charges stationnaires et pour régler le point zéro (3) de la courbe du ressort de correction par rapport au point de fonctionnement, ledit ressort de correction comprenant deux éléments (10, 11) équipés respectivement d'aimants permanents (12, 15), l'un de ces éléments étant relié à la partie montée sur ressorts et l'autre élément étant relié à la partie non montée sur ressorts de la masse du véhicule, et lesdits aimants permanents étant montés sur les parties du ressort de correction les uns derrières les autres respectivement dans le sens du mouvement, caractérisé par le fait qu'entre les aimants permanents (12, 15) sur chaque partie (10, 11) du ressort de correction (2) sont disposés des entretoises (13, 16) en fer doux agissant de manière à concentrer le flux magnétique, que lesdites entretoises en fer doux sont adjacentes aux pôles de même polarité de deux aimants permanents voisins et que les axes de magnétisation des aimants permanents sont disposés parallèlement au sens du mouvement (14), et que cette disposition est réalisée de telle sorte que le flux magnétique dévié à travers les entretoises en fer doux (13, 16) perpendiculairement au sens du mouvement (14) génère des pôles sur les entretoises en fer doux des deux éléments (10, 11) du ressort de correction (2), les pôles de même polarité étant placés face à face à la même hauteur par rapport au sens du mouvement (14) en se repoussant réciproquement dans un équilibre instable.

2. Système selon la revendication 1, caractérisé par le fait que les aimants permanents (12, 15) des deux éléments (10, 11) sont montés respectivement sur des disques placés concentriquement sur le fer doux et que le mouvement s'effectue dans le sens de l'axe du disque (figures 5, 6).

3. Système selon la revendication 1, caractérisé par le fait que pour la réalisation d'un ressort tournant, les aimant permanents (12, 15) et les entretoises (13, 16) en fer doux sont assemblés alternativement en deux bagues concentriques (17, 18) et par le fait que l'axe des bagues (17, 18) constitue l'axe de rotation (20) (figures 7, 8).

4. Système selon la revendication 1, caractérisé par le fait que, en vue de réaliser un ressort tournant, les aimants permanents (12, 15) et les entretoises (13, 16) en fer doux des deux éléments (10, 11) sont montés de manières à former deux bagues de structure identique (17, 18) qui sont disposés symétriquement face à face dans un même axe (figure 9).

5. Système selon la revendication 1, caractérisé par le fait que les aimants permanents (12, 15) et les entretoises (13, 16) en fer doux sont disposés en direction rectiligne, à la manière d'un paquet.

6. Système selon les revendications 2, 3, 4 ou 5, caractérisé par le fait que les aimants permanents (12, 15) sont réalisés en forme de trapèze, de secteur ou de parallélépipède.

7. Système selon la revendication 1, caractérisé par le fait que la distance réciproque entre les deux éléments (10, 11) peut être modifiée.

8. Système selon la revendication 1, caractérisé par le fait que les aimants permanents (12, 15) ne sont prévus que sur une partie du pourtour ou une partie de leur disposition rectiligne, tandis qu'une autre partie du pourtour ou une autre partie de leur disposition est maintenue exempte de tout aimant permanent et qu'il est prévu un dispositif (26) destiné à modifier les surfaces actives des pôles situés face à face ou la distance entre les pôles.

9. Système selon la revendication 1, caractérisé par le fait que l'importance de la rigidité négative du ressort de correction (2) est légèrement inférieure à l'importance de la rigidité positive du ressort porteur (1).

10. Système selon la revendication 1, caractérisé par le fait que le dispositif (6) présente un organe de réglage électrique, pneumatique ou hydraulique destiné à déplacer le point (3) qui constitue le passage par zéro de la courbe.

Kraft

Fig. 1

Weg

Fig. 2

Fig. 3

Fig. 4

Fig. 5

Fig. 6

Fig. 8    Fig. 7

Fig. 9

Fig. 10

Fig. 11

Fig. 12